# EUROPÄISCHE PATENTSCHRIFT

(11) **EP 1 763 917 B1**
(45) Veröffentlichungstag und Bekanntmachung des Hinweises auf die Patenterteilung: **27.01.2010**
(21) Anmeldenummer: 05764080.7
(22) Anmeldetag: 14.06.2005
(51) Int. Cl.: H02K 5/10, H02K 5/22, H02K 15/14, H02K 5/08, B29C 45/00

(54) **GEHÄUSETEIL FÜR EINE ANTRIEBSEINHEIT, SOWIE VERFAHREN UND WERKZEUG ZUR HERSTELLUNG EINES SOLCHEN**
HOUSING PART FOR A DRIVE UNIT AND METHOD AND TOOL FOR THE PRODUCTION THEREOF
PARTIE DE BOITIER POUR UNITE D'ENTRAINEMENT ET PROCEDE ET OUTIL POUR PRODUIRE UNE TELLE PARTIE DE BOITIER

(30) Priorität: 29.06.2004 DE 102004031314
(43) Veröffentlichungstag der Anmeldung: 21.03.2007
(73) Patentinhaber: ROBERT BOSCH GMBH, 70442 Stuttgart (DE)
(72) Erfinder: MAERKLE, Jens, 77815 Buehl (DE)
(86) Internationale Anmeldenummer: PCT/EP2005/052738
(87) Internationale Veröffentlichungsnummer: WO 2006/000535

(56) Entgegenhaltungen:
- EP-A- 1 044 780
- DE-U1- 20 004 338
- US-A1- 2002 053 800
- PATENT ABSTRACTS OF JAPAN Bd. 1996, Nr. 06, 28. Juni 1996 (1996-06-28) & JP 08 047943 A (TOSHIBA SILICONE CO LTD), 20. Februar 1996 (1996-02-20)

## Beschreibung

### Stand der Technik

Die Erfindung betrifft ein Gehäuseteil für eine Antriebseinheit, sowie ein Verfahren zur Herstellung eines solchen Gehäuseteils und ein Spritzgusswerkzeug zur Herstellung eines solchen Gehäuseteils nach der Gattung der unabhängigen Ansprüche.

Es sind viele Antriebsvorrichtungen bekannt, bei denen das Gehäuse aus verschiedenen Gehäuseteilen besteht, die für eine Anwendung in feuchter Umgebung wasserdicht gegeneinander abgedichtet sind. So zeigt beispielsweise die DE 200 04 338 U1 einen Fensterheberantrieb, bei dem ein Einschubmodul in eine entsprechende Öffnung eines Getriebegehäuses einsetzbar ist. Dabei stellt das Einschubmodul ein Gehäuseteil dar, das eine Deckelfläche für die Öffnung im Getriebegehäuse mit einem daran angeformten. Stecker aufweist An der Innenseite des Gehäuseteils ist eine radiale Dichtung mit mehreren Dichtlippen angeformt, die das Getriebegehäuse beim Einführen in einem näherungsweise rechteckigen Schacht abdichtet. Solche Radialdichtungen werden üblicherweise an das Gehäuseteil angespritzt, wobei dann oft sogenannte Bindenähte und Anspritzpunkte innerhalb der radialen Dichtfläche liegen. Solche Unregelmäßigkeiten in der Dichtfläche beeinträchtigen die Dichtheit des Gehäuses von solchen Antriebseinheiten.

Vorteile der Erfindung

Das erfindungsgemäße Gehäuseteil, sowie das Verfahren und das Spritzgusswerkzeug zur Herstellung eines solchen Gehäuseteils mit den Merkmalen der unabhängigen Ansprüche, haben den Vorteil, dass durch das Ausbilden eines sogenannten Steigdoms in axialer Verlängerung zur radialen Dichtfläche einer an das Gehäuseteil angespritzten Radialdichtung diese keine Bindenähte aufweist. Nach dem Einspritzen der zweiten elastischen Komponente in die Form der Radialdichtung steigt der Bereich, in dem die beiden Fliessfronten zusammentreffen und eine Bindenaht bilden, innerhalb des Steigdoms nach oben, so dass sich die radiale Dichtfläche durch eine sehr homogene Materialverteilung auszeichnet. Der Bereich der Steigdome hat keine dichtende Wirkung, so dass auftretende Innenhomogenitäten oder Lunker in den Steigedomen die Dichtigkeit des Gehäuses nicht beeinträchtigen. Dadurch ist der Spritzprozess beim Herstellen der Dichtungen weniger kritisch, so dass hierfür größere Schwankungen des Verfahrensprozess akzeptiert werden können.

Durch die in den Unteransprüche ausgeführten Merkmale sind vorteilhafte Weiterbildungen des erfindungsgemäßen Gehäuseteils, sowie dessen Herstellungsverfahren möglich. Sind die Steigdome beispielsweise derart angeordnet, dass deren äußere radiale Wand über den gesamten axialen Montageweg des Gehäuseteils nicht mit der korrespondierenden radialen Dichtfläche des Gehäuses in Berührung kommt, wird die Dichtwirkung der radialen Dichtfläche durch die Steigdome nicht negativ beeinflusst.

Bei herkömmlich angespitzten Radialdichtungen bilden die beiden teilweise erkalteten Fließfronten eine Bindenaht, die zu einer radialen Unebenheit in der Dichtfläche führt, wodurch die Dichtwirkung reduziert wird. Durch das Anformen der Ansteigdome kann die Bildung einer Bindenaht in der radialen Dichtfläche verhindert werden.

Aufgrund der besonders homogenen Oberfläche der radialen Dichtfläche kann die Radialdichtung auch zur Abdichtung einer näherungsweise rechteckigen Öffnung im Gehäuse verwendet werden, da bei langen, geradlinig ausgebildeten Dichtflächen deren Oberflächenqualität besonders wichtig ist.

In einer bevorzugten Ausgestaltung, weist die Radialdichtung genau einen Anspritzpunkt auf, der nicht im Bereich der umlaufenden Radialdichtung, sondern vorzugsweise radial innerhalb derselben angeordnet ist. Dadurch werden auch Unregelmäßigkeiten der Dichtfläche durch direkt an der Radialdichtung angeordnete Anspritzpunkte unterbunden.

Besonders günstig ist es, ausgehend von einem Anspritzpunkt innerhalb der Radialdichtung das elastische Material über zwei symmetrische Verbindungsstücke der Form der Radialdichtung zuzuführen. Liegen diese Verbindungsstücke beispielsweise in etwa der Mitte der langen Seiten der rechteckförmigen Radialdichtung, werden die Steigdome besonders vorteilhaft näherungsweise in der Mitte der beiden kurzen Seiten der rechteckförmigen Dichtung angeordnet. Durch diese Ausführung ist gewährleistet, dass weder durch die Anspritzpunkte, noch durch Bindenähte Unregelmäßigkeiten in der radialen Dichtfläche entstehen.

In einem weiteren Ausführungsbeispiel weist das Gehäuseteil zusätzlich axiale Spielausgleichselemente auf, die vorzugsweise einstückig mit der Radialdichtung angespritzt sind. Dadurch kann das Gehäuseteil mit der Radialdichtung in axialer Richtung auch mittels Rastelementen, die in korrespondierenden Gegenelemente des Gehäuses greifen, mit diesem zuverlässig verbunden werden. Durch ein Verzicht von separaten Verbindungsmittel zwischen dem Gehäuseteil und dem Gehäuse, kann dabei der Montageprozess automatisiert werden.

Das Gehäuseteil mit der Radialdichtung kann besonders günstig mittels eines Zwei Komponenten-Kunststoff Spritzgussverfahren hergestellt werden, bei dem zuerst das Gehäuseteil beispielsweise mit Hartkunststoff gespritzt wird. Dabei wird das Volumen für die zweite elastische Komponente, beispielsweise eine Elastomer, durch ein Einlegeteil ausgespart. Nach Entfernen des Einlegeteils wird dann in einem zweiten Schritt, das Material der Radialdichtung in die selbe Spritzgussform eingespritzt, wobei dieses über eine zentral angeordnete Einspritzdüse sich über Verbindungsstücke in der Form der Radialdichtung ausbreitet und anschließend das Volumen der Steigdome ausfüllt. In einem alternativen Zwei-Komponenten-Spritzguss-Verfahren werden die zwei Komponenten in zwei unterschiedlichen Nestern eines Werkzeugs angespritzt, wobei hier das Gehäuseteil von einem Nest in das andere Nest umgesetzt wird. Mittels solcher gut handhabbaren zwei Komponenten-Spritzverfahren kann eine sehr regelmäßige radiale Dichtfläche kostengünstig an das Gehäuseteil angeformt werden.

Wird während des Spritzverfahrens an den Enden der Ansteigdome ein Druck-, Farb-, oder sonstiger Sensor angeschlossen, kann während des Spritzverfahrens sehr gut überprüft werden, ob die zweite elastische Komponente das gesamte Volumen der Radialdichtung zuverlässig ausfüllt. Dazu muss der Spritzvorgang solange fortgeführt werden, bis alle Sensoren an den Steigdomen das Befüllen der Steigdome mit dem elastischen Material anzeigen.

An dem erfindungsgemäßen Spritzgusswerkzeug, zur Ausführung des erfindungsgemäßen Spritzverfahrens, können die Anstiegsdome ausgehend von der Radialdichtung einfach in axialer Verlängerung ausgeformt werden. Ebenso kann die Einspritzöffnung mit den Verbindungsstücken zur Radialdichtung günstig als einstückiges Einlegeteil oder als zweites Nest in der Spritzgussform ausgebildet werden. Dadurch entfallen aufwendige Schieber für das Spritzgusswerkzeug.

Besonders günstig ist es, die Trennebene des Formwerkzeugs in einer Diagonalen der im wesentlichen rechteckförmigen Radialdichtung anzuordnen. Dabei treten eventuelle Materialunregelmäßigkeiten, verursacht durch die Trennstelle des Spritzwerkzeugs an den Ecken der Radialdichtung auf. Das hat den Vorteil, dass durch die Form der abgerundeten Ecken an dieser Stelle eine erhöhte Materialpressung mit erhöhten Dichtkräften auftreten (verglichen mit den geraden Abschnitten), die eventuelle geringfügige Unebenheiten durch die Trennfläche ausgleichen.

### Zeichnungen

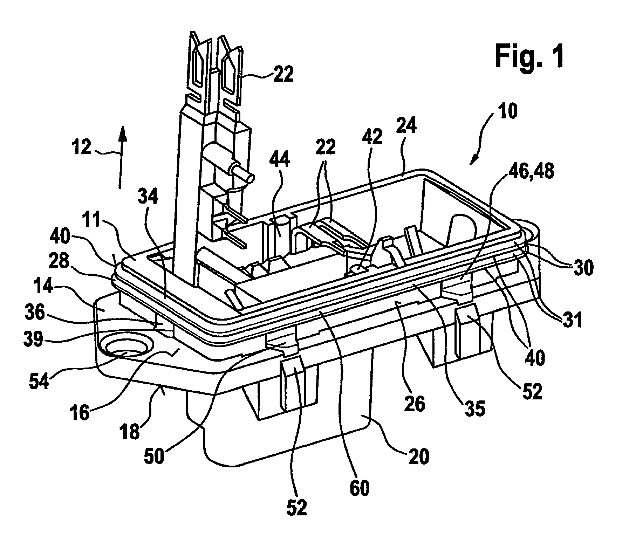

Ein Ausführungsbeispiel der Erfindung ist in den Zeichnungen dargestellt und in der nachfolgenden Beschreibung näher erläutert.
Es zeigen Figur 1 eine perspektivische Darstellung eines Gehäuseteils,
Figur 2 eine weitere Darstellung desselben Gehäuseteils und
Figur 3 eine Darstellung der zweiten Komponente desselben Gehäuseteils, die die Radialdichtung bildet.

### Beschreibung des Ausführungsbeispiels

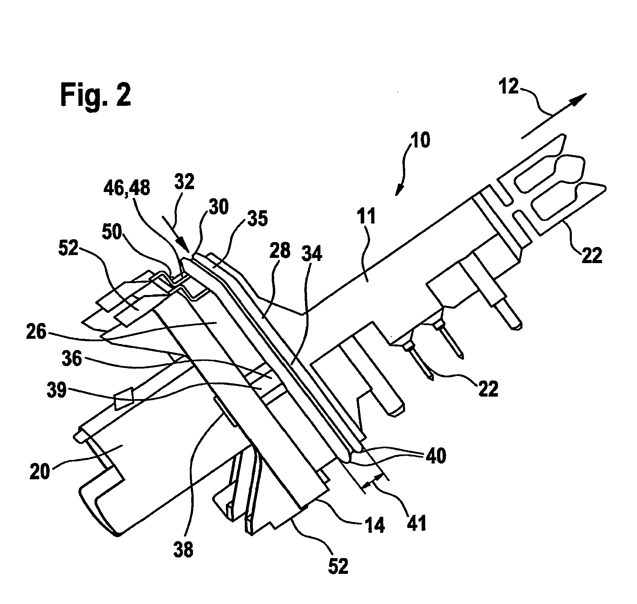

In Figur 1 ist eine Gehäuseteil 10 dargestellt, das geeignet ist, ein Getriebe- bzw. Elektronikgehäuse einer Antriebseinheit wasserdicht abzuschließen. Das nicht näher dargestellte Gehäuse der Antriebseinheit weist beispielsweise eine in etwa rechteckige Öffnung mit einer radialen Seitenwand auf, in die zum Verschließen des Gehäuses das Gehäuseteil 10 in axialer Richtung 12 eingeführt wird. Das Gehäuseteil 10 weist ein Deckelelement 14 mit einer Innenseite 16 und einer Außenseite 18 auf. An der Außenseite 18 ist beispielsweise ein Stecker 20 angeformt, wobei elektrische Kontakte 22 durch das Deckelelement 14 auf die Innenseite 16 durchgeführt werden. An der Innenseite 16 des Deckelelements 14 ist eine umlaufende Wand 24 mit einer radialen Außenfläche 26 angeformt, an der eine umlaufende Radialdichtung 28 angespritzt ist. Die Radialdichtung 28 ist näherungsweise rechteckig mit an den Ecken abgerundeten Radien 30 ausgebildet, um eine korrespondierende rechteckige Öffnung im Gehäuse abzudichten. Die Radialdichtung 28 weist beispielsweise zwei oder mehrere Dichtlippen 31 auf, die eine radiale Dichtfläche 40 bilden, die eine axiale Ausdehnung 41 aufweist. Beim Einführen in das Gehäuse wird die Radialdichtung 28 auf Grund auftretender Radialkräfte 32 (senkrecht zur Axialrichtung 12) gegen eine radiale Wand des Gehäuses presst und elastisch verformt. Jeweils etwa in der Mitte der kurzen Seite 34 der Radialdichtung 28 ist ein Steigdom 36 angeordnet, der sich ausgehend von der Radialdichtung 28 in axialer Richtung 12 erstreckt. Im Ausführungsbeispiel durchdringt der Steigdom 36 das Deckelelement 14 und bildet an der Außenseite 18 ein axiales Ende 38, wie dies in Figur 2 dargestellt ist. Um die Dichtwirkung der Radialdichtung 28 nicht zu beeinflussen, sind die Steigdome 36 radial versetzt, zur radialen Dichtfläche 40 angeordnet. Im Ausführungsbeispiel liegt beispielsweise eine äußere radiale Wand 39 des Steigdoms 36 innerhalb der radialen Dichtfläche 40. Innerhalb der Radialdichtung 28 ist ebenfalls ein Anspritzpunkt 42 angeordnet, der über Verbindungsstücke 44 mit der Radialdichtung 28 verbunden ist. Dadurch, dass sowohl die Steigdome 36, als auch der Anspritzpunkt 42 nicht im Bereich der radialen Dichtfläche 40 angeordnet sind, ist diese besonders homogen, ohne Bindenaht und Anspritzstörungen ausgebildet. Zusätzlich zu den Steigdomen 36 sind an die Radialdichtungen 28 weitere axiale Fortsätze 46 angeformt, die als axiale Spielausgleichelemente 48 dienen. Die Spielausgleichselemente 48 stützen sich einerseits an der Innenseite 16 des Deckelelements 14 ab und bilden auf der gegenüberliegenden Seite eine axiale Anschlagsfläche 50 für das Gehäuse. Durch die Form und Abmessung der Spielausgleichselemente 48 kann eine Federkraft eingestellt werden, die für eine Rastverbindung 52 zwischen dem Gehäuseteil 10 und dem Gehäuse notwendig ist. Hierzu sind an dem Gehäuseteil 10 beispielsweise Rastnasen 52 ausgebildet, die in entsprechende nicht näher dargestellte Rastlaschen des Gehäuses eingreifen. Als Alternative zu den Rastelementen 52 kann das Gehäuseteil 10 auch mittels separaten Verbindungsmittel befestigt werden, wozu am Gehäuseteil 10 Aufnahmen 54 für separate Verbindungsmittel, beispielsweise Schrauben oder Nieten angeformt sind.

In Figur 2 ist deutlich zu erkennen, dass die axialen Fortsätze 46 der Spielausgleichselemente 48, ebenso wie die Steigdome 36, radial versetzt zur radialen Dichtfläche 40 angeordnet sind, so dass diese die axialen Wände des Gehäuses beim axialen Einführen des Gehäuseteils 10 in das Gehäuse nicht berühren. Die axialen Spielausgleichselemente 48 sind im Bereich der Rastelemente 52 angeordnet, die in einer alternativen Ausführung auch als Rastösen ausgebildet sein können, in die entsprechende Rasthaken des Gehäuses eingreifbar sind.

Das Gehäuseteil 10 wird mittels eines zwei Komponenten-Spritzgussverfahren hergestellt, wobei in einem ersten Schritt ein Grundkörper aus einer ersten Komponente 11, beispielsweise Hartplastik gespritzt wird. Während dieses ersten Spritzvorgangs wird in die Werkzeugform ein Einsatz eingelegt, der die Form für die zweite Komponente 60 aufweist. Nach Entfernen des Einsatzes wird in einem zweiten Schritt die zweite Komponente 60 am Anspritzpunkt 42 in das Spritzgusswerkzeug eingespritzt, wobei als zweite Komponente 60 ein elastisches Material, vorzugsweise ein Elastomer oder Thermoplast verwendet wird. In einem alternativen Spritzguss-Verfahren werden die zwei Komponenten in zwei unterschiedlichen Nestern eines Werkzeugs angespritzt, wobei hier das Gehäuseteil 10 von einem Nest in das andere Nest umgesetzt wird.

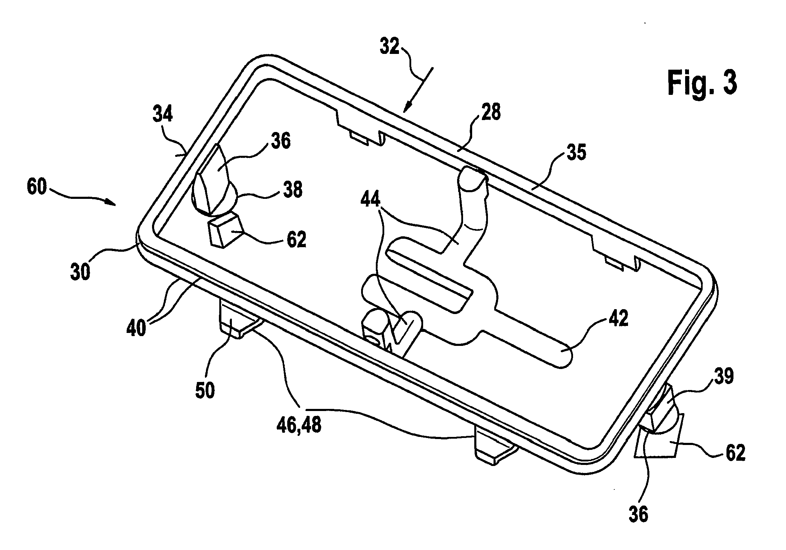

In Figur 3 ist die zweite, elastische Komponente 60 ohne die erste Komponente 11 dargestellt, um das Spritzgussverfahren zu verdeutlichen. Ausgehend vom Anspritzpunkt 42 fließt die zweite Komponente 60 über symmetrisch angeordnet Verbindungsstücke 44 in etwa mittig zu den langen Seiten 35 in die Ausformung der Radialdichtung 28. Beim Fließen der zweiten Komponente 60 bilden sich teilweise abgekühlte Fließfronten, die im mittleren Bereich der kurzen Seiten 34 zusammentreffen und sich in die Steigdome 36 ergießen. Dadurch befindet sich die Bindenaht zwischen den FlieBfronten nicht im Bereich der radialen Dichtfläche 40, sondern innerhalb der Steigdome 36, wo diese die Dichtwirkung nicht beeinträchtigen. Zur besseren Kontrolle des Fließvorgangs sind während des Spritzverfahrens an den axialen Enden 38 der Ausformungen für die Steigdome 36 Sensoren 62 angeordnet, die das Eintreffen des Materials der zweiten Komponente 60 in den Steigdomen 36 detektieren. Dadurch ist gewährleistet, dass der Bereich der Radialdichtung 28 mit der radialen Dichtfläche 40 vollständig ausgefüllt ist.

Das nicht näher dargestellte Spritzgusswerkzeug ist als schieberloses Werkzeug ausgebildet, und weist vorzugsweise eine Trennebene auf, die in der Diagonalen der im wesentlichen rechteckförmigen Radialdichtung 28 liegt Dadurch kommen eventuell auftretende kleine Grate, die durch die Trennfläche verursacht werden, an den abgerundeten Ecken 30 auf. An diesen Ecken treten aber beim Einfügen des Gehäuseteils 10 in die radiale Wand des Gehäuses erhöhte Radialkräfte 32 auf, so dass geringe Unebenheiten in diesem Bereich die Dichtwirkungen nicht beeinträchtigen.

Es sei angemerkt, dass hinsichtlich des in den Figuren und der Beschreibung gezeigten Ausführungsbeispiels viele Kombinationsmöglichkeiten der einzelnen Merkmale untereinander möglich sind. So kann beispielsweise die konkrete Form und der Querschnitt der Radialdichtung 28 den entsprechenden Anwendungen angepasst werden. Ebenso kann die Anzahl und die Anordnung der Steigdome 36 und der Anspritzpunkte 42 und der axialen Spielausgleichselemente 48 variiert werden. Auch ist die Form oder die Funktion des Gehäuseteils 10 nicht auf das Ausführungsbeispiel beschränkt und kann beispielsweise auch für reine Steckerelemente oder für Deckelemente 14 ohne elektrische Kontakte 22 verwendet werden. Bevorzugt findet das erfindungsgemäße Gehäuseteil 10 Anwendung für Stellantriebe im Kraftfahrzeug, beispielsweise für Elektronik Module von Fensterheber- oder Schiebedachantrieben.

## Patentansprüche

1. Gehäuseteil (10) für eine Antriebseinheit aus einer ersten Komponente (11), mit einer angeformten Radialdichtung (28) aus einer zweiten, elastischen Komponente (60), die eine radiale Dichtfläche (40) zum wasserdichten Abschließen eines Gehäuses aufweist, wobei das Gehäuseteil (10) und die Radialdichtung (28) mittels eines zweifliess strom Spritzgussverfahren gefertigt sind, **dadurch gekennzeichnet, dass** an der Radialdichtung (28) mindestens ein Steigdom (36) angeformt ist, der sich ausgehend von und radial innerhalb der radialen Dichtfläche (40) in axialer Richtung (12) erstreckt und wobei innerhalb des Steigdoms die beiden Fliess fronten des Spritzguss materials, beim Spritzguss verfahren zusammentreffen und eine Bindenant bilden

2. Gehäuseteil (10) nach Anspruch 1, **dadurch gekennzeichnet, dass** insbesondere zwei Steigdome (36) radial innerhalb der radialen Dichtfläche (40) angeordnet sind.

3. Gehäuseteil (10) nach einem der Ansprüche 1 oder 2, **dadurch gekennzeichnet, dass** die radiale Dichtfläche (40) keine Bindenaht aufweist

4. Gehäuseteil (10) nach einem der vorgehenden Anspruch, **dadurch gekennzeichnet, dass** die Radialdichtung (28) im wesentlichen rechteckig zur Abdichtung einer im wesentlichen rechteckigen Öffnung des Gehäuse s ausgebildet ist.

5. Gehäuseteil (10) nach einem der vorgehenden Ansprüche, **dadurch gekennzeichnet, dass** ein - insbesondere genau ein - Anspritzpunkt (42) der zweiten Komponente (60) radial innerhalb der Radialdichtung (28) angeordnet ist

6. Gehäuseteil (10) nach einem der vorgehenden Ansprüche, **dadurch gekennzeichnet, dass** zwei Verbindungsstücke (44) vom Anspritzpunkt (42) zu den Mitten der langen Seiten (35) und zwei Ansteigdome (36) in etwa mittig an den kurzen Seiten (34) der näherungsweise rechteckförmigen Radialdichtung (28) angeordnet sind.

7. Gehäuseteil (10) nach einem der vorgehenden Ansprüche, **gekennzeichnet durch** angeformte Rastelemente (52), die mit entsprechenden Gegenrastelementen des Gehäuses verbindbar sind, um das Gehäuseteil (10) axial zu fixieren, wobei insbesondere die Ansteigdome (36) als axiale Spielausgleichselemente (48) mit einer axialen Anschlagsfläche (50) für das Gehäuse ausgebildet sind.

8. Verfahren zur Herstellung eines Gehäuseteils (10) mit einer angeformten Radialdichtung (28) - insbesondere nach einem der Ansprüche 1 bis 7 -, wobei in einem ersten Schritt das Gehäuseteil (10) aus einer ersten Komponente (11) gespritzt wird, und in einem zweiten Schritt die Radialdichtung (28) aus einer zweiten Komponente (60) an das Gehäuseteil (10) angespritzt wird, **dadurch gekennzeichnet, dass** beim Anspritzen mit zwei Fliessströme der zweiten Komponente (60) diese zuerst das Volumen der Radialdichtung (28) ausfüllt und anschließend mindestens eine Steigdom (36) ausfüllt, der sich axial über die axiale Ausdehnung (41) und radial innerhalb der radialen Dichtfläche (40) hinaus erstreckt und wobei innerhalb des Steigdoms die beiden Fliessfronten des Spritzguss materials, Zusammen treffen und eine βindenacht bilden.

9. Verfahren zur Herstellung eines Gehäuseteil (10)s mit einer angeformten Radialdichtung (28) nach Anspruch 8, **dadurch gekennzeichnet, dass** die zweite Komponente (60) radial innerhalb der Radialdichtung (28) in die Spritzgussform eingespritzt wird.

10. Verfahren zur Herstellung eines Gehäuseteils (10) mit einer angeformten Radialdichtung (28) nach einem der Ansprüche 8 oder 9, **dadurch gekennzeichnet, dass** an einem axialen Ende (38) des mindestens einen steigdoms (36) ein Sensor (62) - insbesondere ein Drucksensor oder Farbsensor - angeordnet is der während des Spritzvorgangs anzeigt, ob die zweite Komponente (60) der steigdom (36) ausfüllt.

11. Spritzgusswerkzeug zur Herstellung eines Gehäuseteils (10) mit einer angeformten Radialdichtung (28) nach einem der Ansprüche 8 bis 10, **dadurch gekennzeichnet, dass** an dem Spritzgusswerkzeug mindestens eine zusammenhängende Ausformung für die Radialdichtung (28) mit einem steigdom (36) ausgebildet ist, und innerhalb der Ausformung für die Radialdichtung (28) eine Einspritzöffnung (42) angeordnet ist.

12. Spritzgusswerkzeug nach Anspruch 11, **dadurch gekennzeichnet, dass** die Ausformung für die Radialdichtung (28) im wesentlichen rechteckig ausgebildet ist und das Spritzgusswerkzeug zur Entnahme des Gehäuseteils (10) diagonal zur rechteckigen Form der Radialdichtung (28) trennbar ist.

## Claims

1. Housing part (10) for a drive unit, said part comprising a first component (11), with a formed-on radial seal (28) comprising a second, elastic component (60), which has a radial sealing surface (40) for the watertight closing-off of a housing, wherein the housing part (10) and the radial seal (28) are produced by means of an injection-moulding process using two flow streams, **characterized in that** at least one riser dome (36) is formed onto the radial seal (28) and extends from, and toroidally within, the radial sealing surface (40) in the axial direction (12), and the two flow fronts of the injection-moulding material come together during the injection-moulding process within the riser dome and form a fusion seam.

2. Housing part (10) according to Claim 1,
**characterized in that**, in particular, two riser domes (36) are arranged radially within the radial sealing surface (40).

3. Housing part (10) according to either of Claims 1 and 2, **characterized in that** the radial sealing surface (40) has no fusion seam.

4. Housing part (10) according to one of the preceding claims, **characterized in that** the radial seal (28) is formed as essentially rectangular in order to seal an essentially rectangular opening in the housing.

5. Housing part (10) according to one of the preceding claims, **characterized in that** a - in particular precisely one - gating point (42) of the second component (60) is arranged radially within the radial seal (28).

6. Housing part (10) according to one of the preceding claims, **characterized in that** two connecting pieces (44) are arranged from the gating point (42) to the middles of the long sides (35) and two riser domes (36) are arranged approximately midway along the short sides (34) of the approximately rectangular radial seal (28).

7. Housing part (10) according to one of the preceding claims, **characterized by** formed-on detent elements (52), which can be connected to corresponding counterpart detent elements of the housing in order to fix the housing part (10) in place axially, the riser domes (36) being formed in particular as axial play-compensating elements (48) with an axial stop surface (50) for the housing.

8. Method for producing a housing part (10) with a formed-on radial seal (28) - in particular according to one of Claims 1 to 7 - , wherein, in a first step, the housing part (10) is injection-moulded from a first component (11) and, in a second step, the radial seal (28) is injection-moulded onto the housing part (10) from a second component (60), **characterized in that**, during the moulding-on with two flow streams of the second component (60), said component first fills the volume of the radial seal (28) and then fills at least one riser dome (36), which extends axially over the axial extent (41) and radially within the radial sealing surface (40), and the two flow fronts of the injection-moulding material meet within the riser dome and form a fusion seam.

9. Method for producing a housing part (10) with a formed-on radial seal (28) according to Claim 8, **characterized in that** the second component (60) is injected into the injection mould radially within the radial seal (28).

10. Method for producing a housing part (10) with a formed-on radial seal (28) according to either of Claims 8 and 9, **characterized in that** a sensor (62)
- in particular a pressure sensor or colour sensor
- is arranged at one axial end (38) of the at least one riser dome (36) and indicates during the injecting operation whether the second component (60) fills the riser dome (36).

11. Injection-moulding tool for producing a housing part (10) with a formed-on radial seal (28) according to one of Claims 8 to 10, **characterized in that** at least one continuous cavity for the radial seal (28) with a riser dome (36) is formed on the injection-moulding tool, and an injection opening (42) is arranged within the cavity for the radial seal (28).

12. Injection-moulding tool according to Claim 11, **characterized in that** the cavity for the radial seal (28) is formed as essentially rectangular and the injection-moulding tool can be parted diagonally in relation to the rectangular form of the radial seal (28) for the removal of the housing part (10).

## Revendications

1. Partie de boîtier (10) pour une unité d'entraînement constituée d'un premier composant (11), avec une garniture d'étanchéité radiale façonnée (28) constituée d'un deuxième composant élastique (60), qui présente une surface d'étanchéité radiale (40) pour la fermeture imperméable à l'eau d'un boîtier, la partie de boîtier (10) et la garniture d'étanchéité radiale (28) étant fabriquées au moyen d'un procédé de moulage par injection à courant à deux flux, **caractérisée en ce qu'**au moins un dôme montant (36) est façonné sur la garniture d'étanchéité radiale (28), lequel s'étend à partir de et radialement à l'intérieur de la surface d'étanchéité radiale (40) dans la direction axiale (12), les deux fronts de flux du matériau de moulage par injection, lors du procédé de moulage par injection, se rejoignant à l'intérieur du dôme montant et formant un joint de liaison.

2. Partie de boîtier (10) selon la revendication 1, **caractérisée en ce que** notamment deux dômes montants (36) sont disposés radialement à l'intérieur de la surface d'étanchéité radiale (40) .

3. Partie de boîtier (10) selon l'une quelconque des revendications 1 ou 2, **caractérisée en ce que** la surface d'étanchéité radiale (40) ne présente pas de joint de liaison.

4. Partie de boîtier (10) selon l'une quelconque des revendications précédentes, **caractérisée en ce que** la garniture d'étanchéité radiale (28) est réalisée essentiellement sous forme rectangulaire pour étancher une ouverture du boîtier essentiellement rectangulaire.

5. Partie de boîtier (10) selon l'une quelconque des revendications précédentes, **caractérisée en ce qu'**un point d'injection - et en particulier un seul - (42) du deuxième composant (60) est disposé radialement à l'intérieur de la garniture d'étanchéité radiale (28).

6. Partie de boîtier (10) selon l'une quelconque des revendications précédentes, **caractérisée en ce que** deux pièces de connexion (44) du point d'injection (42) sont disposées au milieu des côtés longs (35) et deux dômes montants (36) sont disposés approximativement au milieu sur les côtés courts (34) de la garniture d'étanchéité radiale (28) approximativement rectangulaire.

7. Partie de boîtier (10) selon l'une quelconque des revendications précédentes, **caractérisée par** des éléments d'encliquetage façonnés (52), qui peuvent être connectés à des éléments d'encliquetage conjugués correspondants du boîtier, afin de fixer axialement la partie de boîtier (10), les dômes montants (36) étant réalisés en particulier sous forme d'éléments de compensation du jeu (48) axiaux avec une surface de butée axiale (50) pour le boîtier.

8. Procédé de fabrication d'une partie de boîtier (10) avec une garniture d'étanchéité radiale façonnée (28) - notamment selon l'une quelconque des revendications 1 à 7 -, dans lequel, dans une première étape, la partie de boîtier (10) est moulée par injection à partir d'un premier composant (11), et dans une deuxième étape, la garniture d'étanchéité radiale (28) est moulée par injection à partir d'un deuxième composant (60) sur la partie de boîtier (10), **caractérisé en ce que** lors du moulage par injection avec deux flux du deuxième composant (60), celui-ci remplit d'abord le volume de la garniture d'étanchéité radiale (28) puis remplit au moins un dôme montant (36) qui s'étend axialement au-delà de l'étendue axiale (41) et radialement à l'intérieur de la surface d'étanchéité radiale (40), les deux fronts de flux du matériau de moulage par injection se rejoignant à l'intérieur du dôme montant et formant un joint de liaison.

9. Procédé de fabrication d'une partie de boîtier (10) avec une garniture d'étanchéité radiale façonnée (28) selon la revendication 8,
**caractérisé en ce que** le deuxième composant (60) est injecté radialement à l'intérieur de la garniture d'étanchéité radiale (28) dans le moule de moulage par injection.

10. Procédé de fabrication d'une partie de boîtier (10) avec une garniture d'étanchéité radiale façonnée (28) selon l'une quelconque des revendications 8 ou 9, **caractérisé en ce qu'**un capteur (62) - notamment -un capteur de pression ou un capteur de couleur - est disposé à une extrémité axiale (38) de l'au moins un dôme montant (36), lequel indique, pendant l'opération d'injection, si le deuxième composant (60) remplit le dôme montant (36).

11. Outil de moulage par injection pour la fabrication d'une partie de boîtier (10) avec une garniture d'étanchéité radiale façonnée (28) selon l'une quelconque des revendications 8 à 10, **caractérisé en ce qu'**au moins une formation rattachée pour la garniture d'étanchéité radiale (28) est réalisée avec un dôme montant (36) sur l'outil de moulage par injection, et une ouverture d'injection (42) est disposée à l'intérieur de la formation pour la garniture d'étanchéité radiale (28).

12. Outil de moulage par injection selon la revendication 11, **caractérisé en ce que** la formation pour la garniture d'étanchéité radiale (28) est réalisée de manière essentiellement rectangulaire et l'outil de moulage par injection peut être séparé pour enlever la partie de boîtier (10) dans une direction diagonale par rapport à la forme rectangulaire de la garniture d'étanchéité radiale (28).
